# EUROPÄISCHE PATENTSCHRIFT

(11) **EP 2 963 243 B1**
(45) Veröffentlichungstag und Bekanntmachung des Hinweises auf die Patenterteilung: **13.03.2019**
(21) Anmeldenummer: 15169103.7
(22) Anmeldetag: 26.05.2015
(51) Int. Cl.: F01D 5/20, F01D 11/12

(54) **STRÖMUNGSMASCHINE MIT LAUFSCHAUFELN MIT IN RICHTUNG DER HINTERKANTE ABGESENKTER SCHAUFELSPITZE**
FLOW ENGINE WITH BLADES HAVING BLADE TIPS LOWERING TOWARDS THE TRAILING EDGE
TURBOMACHINE AVEC AUBES ROTORIQUES AVEC EXTRÉMITÉS ABAISSÉES EN DIRECTION DU BORD DE FUITE

(30) Priorität: 30.06.2014 DE 102014212652
(43) Veröffentlichungstag der Anmeldung: 06.01.2016
(73) Patentinhaber: MTU Aero Engines AG, 80995 München (DE)
(72) Erfinder: Mattschas, Axel, 82319 Starnberg (DE); Eibl, Helmut, 82256 Fürstenfeldbruck (DE); Elorza Gomez, Sergio, 80997 München (DE); Henrichs, Dirk, 80637 München (DE)

(56) Entgegenhaltungen:
- EP-A1- 2 578 805
- EP-A2- 2 071 137
- WO-A1-2012/110865
- DE-A1-102009 040 298
- US-A- 4 738 586
- US-A1- 2007 020 101
- US-A1- 2007 248 457

## Beschreibung

Die Erfindung betrifft eine Strömungsmaschine nach dem Oberbegriff des Patentanspruchs 1.

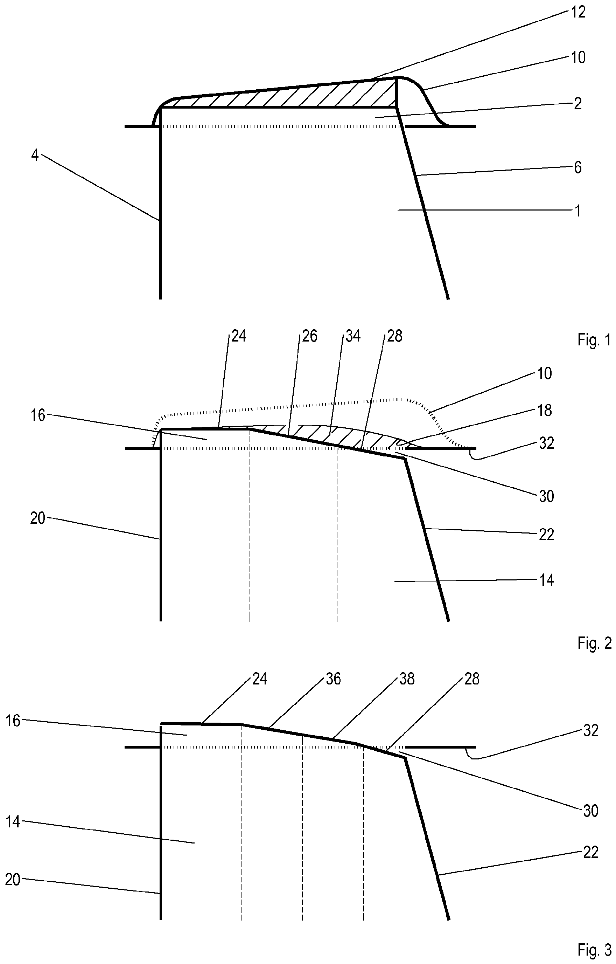

In Figur 1 ist eine herkömmliche Blattspitzengeometrie eines Schaufelblattes 1 einer Laufschaufel einer Strömungsmaschine wie eine Gasturbine, beispielsweise ein Flugtriebwerk, gezeigt. Das Schaufelblatt 1 hat eine Blattspitze 2, die sich in Richtung eines Hauptstroms von einer Vorderkante 4 zu einer Hinterkante 6 des Schaufelblattes 1 erstreckt und im Betrieb in einen startorseitigen Einlaufbelag 10 einläuft. Der Einlaufbelag 10 ist hier ein Silikoneinlaufbelag, dessen Belagverlust durch mechanische Einwirkung beim Anstreifen der Blattspitze 2 bestimmt wird. Beim Anstreifen schiebt die Blattspitze 2 einen "Silikonberg" vor sich her, bis die Reißfestigkeit des Silikonmaterials erreicht ist und das Silikonmaterial ausbricht. Die so ausgebrochenen Silikonpartikel erhöhen noch den Belagsausrieb über das eigentliche Maß des Anstreifens hinaus. Hierdurch stellt sich ein parasitärer Spaltverlust 12 ein, der zu einer ungewollten Vergrößerung eines Betriebsspaltes und damit zu Wirkungsgrad und Pumpgrenzverlusten führt. Zur Verbesserung des Einlaufverhaltens ist es bekannt, in den Einlaufbelag Umfangsnuten einzubringen. Die Einbringung der Umfangsnuten ist jedoch fertigungstechnisch aufwendig.

Aus der WO 2011/002570 A1 ist es bekannt, Blattspitzen von Laufschaufeln vorderkantenseitig mit einer Schneide zu versehen und zusätzlich die Blattspitze in Richtung der Hinterkante radial nach innen abfallen zu lassen. Im Betrieb ist die Schneide derart zu einem startorseitigen gummiartigen Einlaufbelag positioniert, dass grundsätzlich zwischen den Laufschaufeln und dem Einlaufbelag ein Betriebsspalt gebildet ist. Wenn nun die Blattspitze kurzfristig in den Einlaufbelag einläuft, so soll mittels der Schneide ein definierter Abtrag des Einlaufbelags erfolgen. Hierdurch soll vornehmlich eine Reduzierung der Schaufelbelastung erreicht werden, da die durch die Schneide abgetragenen Belagpartikel nicht an der Blattspitze haften bleiben sollen. Die EP 2 071 137 offenbart eine Strömungsmaschine mit den Merkmalen des Oberbegriffs von Anspruch 1. Weiterer Stand der Technik ist aus der EP 2 578 805, WO 2012/110865, US 2007/0248457, DE 10 2009 040 298, WO 2011/157927 A1, WO 2012/163337 A1, EP 1 529 962 A2, US 2007/020101 A1, EP 2 444 592 A1 und aus der EP 2 412 927 A1 bekannt.

Aufgabe der Erfindung ist es, eine Strömungsmaschine zu schaffen, die ein verbessertes Einreibverhalten ihrer Laufschaufeln in einen jeweils gegenüberliegenden startorseitigen Einlaufbelag ermöglicht.

Diese Aufgabe wird gelöst durch eine Strömungsmaschine mit den Merkmalen des Patentanspruchs 1.
Eine erfindungsgemäße Strömungsmaschine, insbesondere ein Flugtriebwerk, hat einen Rotor, der in einem Stator um seine Längsachse drehbar gelagert ist und der zumindest eine Laufschaufelreihe hat, die von einer Vielzahl von Laufschaufeln gebildet ist. Der Stator weist zumindest einen Einlaufbelag auf. Erfindungsgemäß haben die Laufschaufeln Blattspitzen, die ausgehend von laufschaufelseitigen Vorderkanten in Richtung von laufschaufelseitigen Hinterkanten einen vorderen Blattspitzenbereich, zumindest einen mittleren Blattspitzenbereich und einen hinteren Blattspitzenbereich haben, wobei zumindest der zumindest eine mittlere Blattspitzenbereich und der hintere Blattspitzenbereich in Richtung der Hinterkanten radial nach innen abgesenkt sind. Dabei laufen die Laufschaufeln im Betrieb mit jeweils ihrem vorderen Blattspitzenbereich und ihrem zumindest einen mittleren Blattspitzenbereich in den Einlaufbelag ein und sind mit jeweils ihrem hinteren Blattspitzenbereich über einen Spalt von dem Einlaufbelag beabstandet, wobei der hintere Blattspitzenbereich stromabwärts radial innen zu einer statorseitigen Seitenwandung endet. Dadurch, dass die Laufschaufeln Blattspitzen haben, die ausgehend von laufschaufelseitigen Vorderkanten in Richtung von laufschaufelseitigen Hinterkanten zumindest abschnittweise radial nach innen abgesenkt sind, in Kombination mit dem Einlaufen der vorderen Blattspitzenbereiche, wird ein einlaufbelagseitiges schonendes Einreibverhalten erzielt, da die Blattspitzen von den Vorderkanten abnehmend tief in die Einlaufbeläge einlaufen. Ein parasitärer Spaltverlust bzw. ein Zusatzspalt wird vermieden bzw. nahezu vollständig reduziert und ein Betriebsspalt ist minimiert. Folglich ermöglicht die erfindungsgemäße Strömungsmaschine einen verbesserten Wirkungsgrad und geringere Pumpgrenzverluste gegenüber den vorbeschriebenen bekannten Strömungsmaschinen. Zudem erfolgt eine geringere Verschmutzung eines Sekundärluftstroms mit Belagspartikeln. Der Ausrieb an dem Einlaufbelag wird deutlich reduziert und so eine interne Verschmutzung der Strömungsmaschine mit Belagspartikeln reduziert. Zudem bleiben die vorderen Blattspitzenbereiche, die den größten aerodynamischen Einfluss haben, unverändert bzw. nahezu unverändert gegenüber herkömmlichen Laufschaufeln. Gleichzeitig kann dadurch, dass die Blattspitzen eine abfallende Kontur haben, der Einlaufbelag startorseitig unverändert bleiben. Die Anpassung der Blattspitzen ist grundsätzlich kostengünstiger als die Anpassung des Einlaufbelags und kann integral bei der Fertigung der Rotorblätter mit erfolgen. Zudem ist die Blattspitzenanpassung verschleißfrei. Insbesondere ist der Einlaufbelag gummibasiert. Bevorzugterweise besteht er aus Silikon.

Gemäß der Erfindung sind die Laufschaufeln im Betrieb mit jeweils einem hinteren Blattspitzenbereich von dem Einlaufbelag beabstandet. Hierdurch wird von dem Einlaufbelag abgeriebenes Material durch die Absenkung der Blattspitze quasi stromabwärts abtransportiert. Eine Vergrößerung eines "Einlaufbelagberg" durch das abgeriebene Material wird durch den Abtransport zuverlässig verhindert.
Um einen Abtransport der abgeriebenen Partikel in einen Sekundärstrom zuverlässig zu vermeiden, enden gemäß der Erfindung die hinteren Blattspitzenbereiche radial innen zu einer statorseitigen Seitenwandung, die den Hauptstrom radial außen begrenzt. Hierdurch werden die freien Partikel zuverlässig dem Hauptstrom zugeführt.
Bei einem Ausführungsbeispiel weisen die Blattspitzen eine Vielzahl von geradlinigen benachbarten Bereichen mit unterschiedlichen Winkelstellungen zueinander auf. Derartigen Blattspitzen lassen sich durch die geradlinige Ausbildung der einzelnen Blattspitzenbereiche fertigungstechnisch einfach herstellen. Bei einem alternativen Ausführungsbeispiel weisen die Blattspitzen eine Vielzahl von bogenförmigen Bereichen mit unterschiedlichen Radien auf. Bevorzugte Winkel-Schaufeltiefen-Verhältnisse befinden sich im Bereich von [0,005; 0,015]. Die Winkel-Schaufeltiefen-Verhältnisse ergeben sich durch eine beispielsweise 0,2mm bis 0,3mm große Absenkung des hinteren Blattspitzenbereichs zum vorderen Blattspitzenbereich bezogen auf eine Schaufeltiefe von 20mm bis 40mm.
Bei einem anderen alternativen Ausführungsbeispiel weisen die Blattspitzen jeweils zumindest einen geradlinigen Bereich und einen bogenförmigen Bereich auf. Bei sämtlichen Ausführungsbeispielen haben die Blattspitzen jeweils zumindest zwei Bereiche mit unterschiedlichen geometrischen Konturen. Je mehr Bereiche die Blattspitzen aufweisen, desto präziser können sie aerodynamisch angepasst werden.

Der Einlaufbelag schließt bevorzugterweise bündig mit der Seitenwandung ab. Dadurch, dass in Hauptstromrichtung betrachtet die Seitenwandung bündig in den Einlaufbelag übergeht und dieser wiederrum bündig in die Seitenwandung, werden seitenwandnahe Turbulenzen im stromaufwärtigen Übergangsbereich und im stromabwärtigen Übergangsbereich zwischen der Seitenwandung und dem Einlaufbelag verhindert.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Laufschaufel mit einem herkömmlichen Blattspitzenbereich, die in einen statorseitigen Einlaufbelag einer Strömungsmaschine einläuft,
- Figur 2: eine Laufschaufel mit einem Blattspitzenbereich, die in einen statorseitigen Einlaufbelag einer Strömungsmaschine nach einem ersten erfindungsgemäßen Ausführungsbeispiel einläuft, und
- Figur 3: eine Laufschaufel mit einem Blattspitzenbereich, die in einen statorseitigen Einlaufbelag einer Strömungsmaschine nach einem zweiten erfindungsgemäßen Ausführungsbeispiel einläuft.

In Figur 2 ist ein Schaufelblatt 14 einer Laufschaufel im Bereich ihrer Blattspitze 16 einer erfindungsgemäßen Strömungsmaschine in Seitenansicht gezeigt. Die Laufschaufel bildet mit weiteren Laufschaufeln eine Laufschaufelreihe eines Rotors der Strömungsmaschine, der um seine Längsachse im Stator der Strömungsmaschine rotiert. In Figur 2 ist ein Betriebszustand bzw. der Betrieb der Strömungsmaschine gezeigt, in der die Laufschaufeln mit ihren Blattspitzen 16 in einen startorseitigen Einlaufbelag 18 abschnittsweise einlaufen.

Die Strömungsmaschine wird grundsätzlich in Längsrichtung des Rotors von einem Hauptstrom bzw. Primärstrom durchströmt, dem die Schaufelblätter 14 ausgesetzt sind. In dem hier gezeigten Ausführungsbeispiel verläuft die Strömungsrichtung des Hauptstroms von links nach rechts. Angaben wie "axial" und "radial" beziehen sich im Sinne der Erfindung auf die Längsachse des Rotors. Angaben wie "vorne bzw. stromaufwärts" und "hinten bzw. stromabwärts" beziehen sich im Sinne der Erfindung auf die Strömungsrichtung des Hauptstroms.
Die Blattspitze 16 hat einen vorderen Blattspitzenbereich 24, einen mittleren Blattspitzenbereich 26 und einen hinteren Blattspitzenbereich 28. Zur optischen Verdeutlichung der Blattspitzbereiche 24, 26, 28 sind vertikale gestrichelte Linien in das Schaufelblatt 14 eingezeichnet. Die Blattspitzenbereiche 26, 28, 30 haben die gleiche bzw. in etwa die gleiche axiale Erstreckung. Bevorzuterweise hat der vordere Blattspitzenbereich 24 die längste axiale Erstreckung.
Der vordere Blattspitzenbereich 24 ist geradlinig ausgebildet. Er verläuft hier ohne Anstellung axial zur Längsachse des Rotors und somit in Längsrichtung des Hauptstroms. Der mittlere Blattspitzenbereich 26 ist ebenso wie der vordere Blattspitzenbereich 24 geradlinig ausgebildet. Allerdings ist der mittlere Blattpitzenbereich 24 zur Rotationsachse und somit zum vorderen Blattspitzenbereich 24 um einen Winkel angestellt. Die Anstellung ist derart, dass die Blattspitze 16 von ihrer Vorderkante 20 zu ihrer Hinterkante 22 radial nach innen abfällt. Der hintere Blattspitzenbereich 24 ist ebenfalls geradlinig ausgeführt und in einem Winkel zur Längsachse des Rotors angestellt. Er ist im selben Winkel wie der mittlere Blattspitzenbereich angestellt. Hierdurch schließt er sich stufenlos dem mittleren Blattspitzenbereich 26 an und erstreckt sich bis zur Hinterkante 22.
In dem im Figur 2 gezeigten Betrieb laufen der vordere Blattspitzenbereich 24 und der mittlere Blattspitzenbereich 26 in den Einlaufbelag 18 ein, wohingegen der hintere Blattspitzenbereich 28 über einen Spalt 30 von dem Einlaufbelag 18 radial beabstandet ist. Der Spalt 30 wird radial außen vom Einlaufbelag 18 und radial innen vom hinteren Blattspitzenbereich 28 begrenzt. Er ist hier stromabwärts keilförmig erweitert. Die Blattspitze 16 läuft also abschnittsweise in den Einlaufbelag ein, jedoch nicht mit seinem hinteren Blattspitzenbereich 26. Die Hinterkante 6 hat eine derartige radial nach außen gerichtete Erstreckung, dass sie radial innen zu einer statorseitigen Seitenwandung 32 endet, die einen von dem Hauptstrom durchströmten Ringraum radial außen begrenzt. Hierdurch endet der hintere Blattspitzenbereich 28 radial innen zur Seitenwandung 32. Der Spalt 30 ist somit zum Ringraum geöffnet und somit zum Hauptstrom geöffnet.

Der Einlaufbelag 18 ist in einer nicht bezifferten Umfangsnut eines ebenfalls nicht bezifferten Startorabschnittes eingesetzt und schließt bündig mit der Seitenwandung 32 stromabwärts und stromaufwärts der Umfangsnut ab. Er ist beispielsweise in die Umfangsnut eingeklebt und besteht aus einem gummiartigen Material. Bevorzugterweise besteht er aus Silikon.

Im Stillstand der Strömungsmaschine sind die Laufschaufeln mit ihren Blattspitzen 16 von dem gegenüberliegenden Einlaufbelag 18 beabstandet. Zwischen dem Einlaufbelag 18 und den Blattspitzen 16 besteht ein sogenannter Kaltspalt.

Im Betrieb laufen die Laufschaufeln mit ihren vorderen und hier auch mittleren Blattspitzenbereichen 24, 26 in den Einlaufbelag 18 stets ein und schieben einen Materialberg vor sich her. Sobald die Reißfestigkeit des Einlaufbelagmaterials überschritten ist, reißen Partikel von dem Einlaufbelag 18 ab bzw. aus. Hierdurch bildet sich ein schraffiert angedeuteter Betriebsspalt 34 aus. Die herausgerissenen bzw. Partikel werden stromabwärts entlang des mittleren und hinteren Blattspitzenbereichs 26, 28 befördert und treten über den als stromabwärtige Öffnung des Betriebsspalts 34 wirkenden Spalt 30 in den Hauptstrom aus. Aufgrund der erfindungsgemäßen Blattspitzenkontur und des Abtransport der freien Partikel entsteht kein parasitärer Spaltverlust. Der sich so einstellende schraffiert angedeutete Betriebsspalt 34 ist stromabwärts verbreitert. Zum Vergleich ist die Hüllkurve des Einlaufbelags 10 aus Figur 1 in Figur 2 eingetragen. Im Bereich der vorderen Blattspitzenbereiche 24 ist er im Betrieb nahezu gleich Null bzw. nicht vorhanden.

In Figur 3 ist eine alternative Blattspitze 16 eines Schaufelblattes 14 einer Laufschaufel einer erfindungsgemäßen Strömungsmaschine im Betriebszustand der Strömungsmaschine gezeigt. Im Unterschied zum ersten Ausführungsbeispiel nach Figur 2 ist die Blattspitzenkontur als ein Polygonzug aus 4 Blattspitzbereichen 24, 28, 36, 38 dargestellt. Hierdurch erfolgt eine genauere aerodynamische Abstimmung der Blattspitze 16 als im ersten Ausführungsbeispiel nach Figur 2. Sämtliche Blattspitzenbereiche 24, 28, 36, 38 sind geradlinig und haben die gleiche bzw. in etwa die gleiche axiale Erstreckung. Bevorzugterweise hat der vordere Blattspitzenbereich 24 die längste axiale Erstreckung.

Der vordere Blattspitzenbereich 24 ist in Längsrichtung eines Rotors leicht angestellt. Ein sich dem vorderen Blattspitzenbereich 24 anschließender erster mittlerer Blattspitzenbereich 36 ist radial nach innen geführt und geht in einen zweiten mittleren Blattspitzenbereich 38 über. Der zweite mittlere Blattspitzenbereich 38 befindet sich in Winkelstellung zum ersten mittleren Blattspitzenbereich 36 und geht in den hinteren Blattspitzenbereich 28 über, der radial innen zur statorseitigen, radial äußeren Seitenwandung 32 endet. Der hintere Blattspitzenbereich 28 hat die gleiche Winkelstellung zur Längsachse des Rotors, so dass sie sich stufenlos vom hinteren mittleren Blattspitzenabschnitt 38 erstreckt. Die Blattspitzen 16 laufen mit ihrem vorderen Blattspitzenbereichen 24 und mittleren Blattspitzenbereichen 36, 38 in den Einlaufbelag 18 ein. Mit ihrem hinteren Blattspitzenbereich 28 sind sie jedoch vom nicht gezeigten statorseitigen Einlaufbelag 18 radial beabstandet und auch hier radial innen zur Seitenwandung 32 angeordnet, so dass ebenfalls ein keilförmiger, zum Hauptstrom geöffneter Spalt 30 gebildet ist, über den abgerissene Partikel des Einlaufbelags 18 in den Hauptstrom abgegeben werden.

In den Figuren 2 und 3 wird die Erfindung anhand einer Drittelung bzw. Viertelung der Blattspitzen 16 skizziert. Es wird ausdrücklich erwähnt, dass sich auch andersartige Teilungen bzw. Betrachtungsweisen der Blattspitzen 16 im Rahmen der Erfindung befinden. Zudem ist es möglich, die einzelnen Blattspitzenbereiche 24, 26, 28, 36, 38 mit variierenden axialen Erstreckungen und/oder bogenförmig auszubilden.

### Bezugszeichenliste

- 1: Schaufelblatt
- 2: Blattspitze
- 4: Vorderkante
- 6: Hinterkante
- 10: Einlaufbelag
- 12: Spaltverlust
- 14: Schaufelblatt
- 16: Blattspitze
- 18: Einlaufbelag
- 20: Vorderkante
- 22: Hinterkante
- 24: vorderer Blattspitzenbereich
- 26: mittlerer Blattspitzenbereich
- 28: hinterer Blattspitzenbereich
- 30: Spalt
- 32: Seitenwandung
- 34: Betriebsspalt
- 36: erster mittlerer Blattspitzenbereich
- 38: zweiter mittlerer Blattspitzenbereich

## Patentansprüche

1. Strömungsmaschine, insbesondere ein Flugtriebwerk, mit einem Rotor, der in einem Stator um seine Längsachse drehbar gelagert ist und der zumindest eine Laufschaufelreihe hat, die von einer Vielzahl von Laufschaufeln gebildet ist, wobei der Stator zumindest einen Einlaufbelag (18) aufweist, wobei die Laufschaufeln Blattspitzen (16) haben, die ausgehend von laufschaufelseitigen Vorderkanten (20) in Richtung zu laufschaufelseitigen Hinterkanten (22) einen vorderen Blattspitzenbereich (24), zumindest einen mittleren Blattspitzenbereich (26, 36, 38) und einen hinteren Blattspitzenbereich (28) haben, wobei zumindest der zumindest eine mittlere Blattspitzenbereich (26, 36, 38) und der hintere Blattspitzenbereich (28) in Richtung der Hinterkanten (22) radial nach innen abgesenkt sind, **dadurch gekennzeichnet, dass**
im Betrieb die Laufschaufeln mit jeweils ihrem vorderen Blattspitzenbereich (24) und ihrem zumindest einen mittleren Blattspitzenbereich (36, 38) in den Einlaufbelag (18) einlaufen und mit jeweils ihrem hinteren Blattspitzenbereich (28) über einen Spalt (30) von dem Einlaufbelag (18) beabstandet sind, wobei der hintere Blattspitzenbereich (28) stromabwärts radial innen zu einer statorseitigen Seitenwandung (32) endet.

2. Strömungsmaschine nach Anspruch 1, wobei der vordere Blattspitzenbereich (24) ohne Anstellung zur Längsachse verläuft.

3. Strömungsmaschine nach Anspruch 1, wobei der vordere Blattspitzenbereich (24) in Richtung der Hinterkanten (22) radial nach innen abgesenkt ist.

4. Strömungsmaschine nach Anspruch 1, 2 oder 3, wobei die Blattspitzen (16) geradlinige benachbarte Bereiche (24, 26, 28, 36, 38) mit unterschiedlichen Winkelstellungen zueinander aufweisen.

5. Strömungsmaschine nach Anspruch 1, 2 oder 3, wobei die Blattspitzen (16) bogenförmige Bereiche mit unterschiedlichen Radien aufweisen.

6. Strömungsmaschine nach Anspruch 4 oder 5, wobei die Blattspitzen (16) jeweils zumindest einen geradlinigen Bereich (24, 26, 28, 36, 38) und einen bogenförmigen Bereich aufweisen.

7. Strömungsmaschine nach einem der vorhergehenden Ansprüche, wobei der Einlaufbelag (18) in eine statorseitige Umfangsnut eingesetzt ist und bündig mit der Seitenwandung (32) abschließt.

## Claims

1. Turbomachine, in particular an aircraft engine, comprising a rotor, which is mounted in a stator so as to be rotatable about the longitudinal axis thereof and which has at least one rotor blade row that is formed of a plurality of rotor blades, the stator comprising at least one abradable coating (18), the rotor blades having blade tips (16) which have, starting from leading edges (20) on the rotor blade side toward trailing edges (22) on the rotor blade side, a leading blade tip region (24), at least one central blade tip region (26, 36, 38) and a trailing blade tip region (28), at least the at least one central blade tip region (26, 36, 38) and the trailing blade tip region (28) being lowered radially inward toward the trailing edges (22), **characterized in that** during operation, the rotor blades run into the abradable coating (18) via their respective leading blade tip regions (24) and their respective at least one central blade tip regions (36, 38), and their respective trailing blade tip regions (28) are spaced apart from the abradable coating (18) by a gap (30), the trailing blade tip region (28) terminating downstream radially inward relative to a side wall (32) on the stator side.

2. Turbomachine according to claim 1, wherein the leading blade tip region (24) extends with no inclination with respect to the longitudinal axis.

3. Turbomachine according to claim 1, wherein the leading blade tip region (24) is lowered radially inward toward the trailing edges (22).

4. Turbomachine according to claim 1, claim 2 or claim 3, wherein the blade tips (16) comprise straight adjacent regions (24, 26, 28, 36, 38) having different angular positions with respect to one another.

5. Turbomachine according to claim 1, claim 2 or claim 3, wherein the blade tips (16) comprise curved regions having different radiuses.

6. Turbomachine according to either claim 4 or claim 5, wherein the blade tips (16) each comprise at least one straight region (24, 26, 28, 36, 38) and a curved region.

7. Turbomachine according to any of the preceding claims, wherein the abradable coating (18) is inserted into a peripheral groove on the stator side and ends flush with the side wall (32).

## Revendications

1. Turbomachine, en particulier moteur d'aéronef, pourvue d'un rotor installé de manière rotative dans un stator autour de son axe longitudinal et comportant au moins une rangée d'aubes rotoriques constituée d'une pluralité d'aubes rotoriques, le stator présentant au moins une garniture d'entrée (18), les aubes rotoriques comportant des extrémités d'aube (16) comportant, depuis les bords d'attaque côté aube (20) et en direction des bords de fuite côté aube (22), une zone d'extrémité d'aube avant (24), au moins une zone d'extrémité d'aube centrale (26, 36, 38) et une zone d'extrémité d'aube arrière (28), au moins l'au moins une zone d'extrémité d'aube centrale (26, 36, 38) et la zone d'extrémité d'aube arrière (28) étant abaissées radialement vers l'intérieur en direction des bords de fuite (22),
**caractérisée en ce que**
en service, les aubes rotoriques s'introduisent chacune, avec leur zone d'extrémité d'aube avant (24) et leur au moins une zone d'extrémité d'aube centrale (36, 38) respectives, dans la garniture d'entrée (18) et sont chacune espacées de la garniture d'entrée (18) par un intervalle (30) avec leur zone d'extrémité d'aube arrière (28), la zone d'extrémité d'aube arrière (28) se terminant en aval radialement vers l'intérieur en direction d'une paroi latérale (32) côté stator.

2. Turbomachine selon la revendication 1, dans laquelle la zone d'extrémité d'aube avant (24) s'étend sans engagement sur l'axe longitudinal.

3. Turbomachine selon la revendication 1, dans laquelle la zone d'extrémité d'aube avant (24) est abaissée radialement vers l'intérieur dans la direction des bords de fuite (22).

4. Turbomachine selon la revendication 1, 2 ou 3, dans laquelle les extrémités d'aube (16) présentent des zones adjacentes rectilignes (24, 26, 28, 36, 38) avec des positions angulaires différentes les unes par rapport aux autres.

5. Turbomachine selon la revendication 1, 2 ou 3, dans laquelle les extrémités d'aube (16) présentent des zones arquées avec des rayons différents.

6. Turbomachine selon la revendication 4 ou 5, dans laquelle les extrémités d'aube (16) présentent chacune au moins une zone rectiligne (24, 26, 28, 36, 38) et une zone arquée.

7. Turbomachine selon l'une des revendications précédentes, dans laquelle la garniture d'entrée (18) est insérée dans une rainure circonférentielle côté stator et affleure au niveau de la paroi latérale (32).
